# FASCICULE DE BREVET EUROPEEN

(11) **EP 0 869 571 B1**
(45) Date de publication et mention de la délivrance du brevet: **19.05.2004**
(21) Numéro de dépôt: 98400665.0
(22) Date de dépôt: 23.03.1998
(51) Int. Cl.: H01M 10/50, H01M 2/10

(54) **Dispositif de gestion de la température d'une batterie de générateurs électrochimiques**
Temperaturregelungsvorrichtung für eine Batterie von elektrochemischen Generatoren
Temperature control device for a battery of electrochemical generators

(30) Priorité: 24.03.1997 FR 9703537
(43) Date de publication de la demande: 07.10.1998
(73) Titulaire: ALCATEL, 75008 Paris (FR)
(72) Inventeur: Flament, Pascal, 333000 Bordeaux (FR); Fradin, Jean, 86240 Fontaine le Comte (FR); Souliac, Laurent, 96280 Saint Benoit (FR); Rigobert, Gérard, 86000 Poitiers (FR)
(74) Mandataire: Cabinet Hirsch

(56) Documents cités:
- EP-A- 0 596 778
- EP-A- 0 607 675
- DE-A- 4 326 943

## Description

L'invention concerne un dispositif de gestion de la température d'une batterie de générateurs électrochimiques de forme cylindrique à faisceau spiralé disposés côte-à-côte. Il peut s'agir, par exemple, de générateurs du type lithium-ion et de forte capacité (environ 44 Ah). Pour des applications comme la voiture électrique de tels générateurs sont souvent montés en batterie de trois couples montés en série de deux éléments reliés en parallèle, donnant une capacité de 2 x 44 Ah = 88 Ah.

Les générateurs électrochimiques cylindriques à faisceau spiralé peuvent avoir besoin d'être refroidis car ils s'échauffent pendant leur utilisation, ou au contraire réchauffés lorsqu'ils doivent fonctionner à basses températures.

A cet effet, il est connu de gérer la température de la batterie par la circulation d'un fluide caloporteur, organisée au voisinage des générateurs.

Par exemple, le document DE-A-3 416 745 fait connaître un dispositif de refroidissement d'un accumulateur cylindrique individuel dans lequel un liquide circule dans des canaux spiralés autour de la partie inférieure d'un coeur cylindrique dont la partie supérieure contient l'électrolyte. Cette solution, si elle est appliquée à une batterie d'accumulateurs, ne permet pas une répartition homogène de la température entre tous les éléments de la batterie (notamment vis-à-vis des éléments d'angle), lorsque le serpentin entoure la batterie, ou bien conduit à un encombrement excessif si chacun des éléments est entouré par un serpentin.

Le problème particulier d'une batterie composée d'accumulateurs cylindriques disposés côte-à-côte est résolu selon le document DE-4 102 532 en remplissant l'espace entre les accumulateurs d'un matériau poreux dans lequel un fluide caloporteur circule par capillarité. Mais le débit de circulation du fluide est faible et le trajet de circulation mal défini.

Le but de l'invention est de proposer un dispositif de gestion thermique d'une batterie ne présentant pas ces inconvénients, mais assurant au contraire une bonne homogénéité des températures des divers éléments en réduisant les gradients thermiques entre eux.

Ce but est atteint selon l'invention grâce à un dispositif de gestion de la température d'une batterie de générateurs électrochimiques (10) , dans lequel le transport des calories est assuré par la circulation d'un fluide caloporteur, à l'intérieur d'une double paroi (3, 4) , des reliefs (19, 20) étant disposés en chicane à l'intérieur de ladite double paroi (3, 4) pour obliger ledit fluide à circuler alternativement dans une direction et dans la direction opposée, caractérisé en ce que lesdits générateurs sont de forme cylindrique disposés côte à côte, et en ce que le fluide caloporteur circule dans une chemise à double paroi dont la section a la forme d'arcs de cercles (6) accolés par leurs extrémités de telle sorte que les points de jonction (7) desdits arcs (6) soient sensiblement alignés, ladite paroi (3, 4) étant disposée contre ladite batterie de manière à ce que chacun desdits arcs de cercle (6) soit accolé coaxialement à l'un desdits générateurs (10), des reliefs (19, 20) étant disposés de manière à obliger ledit fluide à circuler parallèlement à ladite section.

En disposant ainsi la circulation de fluide caloporteur dans une chemise, réalisée par exemple en plastique, qui se conforme au profil de plusieurs générateurs superposés et assure une circulation en parallèle au voisinage de ceux-ci, on obtient l'homogénéité désirée tout en ayant un encombrement limité.

Avantageusement, le dispositif de l'invention comprend des embouts ou tétines d'entrée et de sortie du fluide caloporteur disposées parallèlement aux générateurs, de façon à faciliter le raccordement, faciliter le remplissage. Pour limiter l'encombrement, les tétines restent à l'intérieur du volume enveloppe de la batterie. La longueur de la zone refroidie, et donc de la chemise, ne doit être égale qu'à la longueur de la partie active (bobineau spiralé) à l'intérieur du générateur ; elle est donc moins longue que le conteneur du générateur, ce qui laisse de la place pour les tétines.

Dans le cas où le conteneur des générateurs est en matériau électriquement conducteur, par exemple métallique, il est nécessaire d'isoler électriquement les éléments entre eux. La portion de la surface du dispositif qui est en contact avec le conteneur, est alors en matériau électriquement isolant. De préférence on enveloppe le conteneur d'un matériau électriquement isolant qui recouvre exclusivement la portion de surface du conteneur qui n'est pas en contact avec le dispositif.

De cette manière la quantité de matériau isolant à utiliser est minimisée et les générateurs sont efficacement isolés les uns des autres. En outre les échanges thermiques avec le dispositif selon l'invention ne sont pas perturbés par la présence d'une couche intermédiaire.

D'autres caractéristiques et avantages de l'invention ressortiront de la description suivante faite en référence aux dessins annexés sur lesquels :
- la figure 1 est une vue en perspective d'un premier mode de réalisation d'un chemise thermique conforme à l'invention,
- la figure 2 est une vue de côté de la chemise de la figure 1,
- la figure 3 est une vue en coupe AA de la figure 2,
- la figure 4 est une vue en perspective d'un second mode de réalisation de chemise thermique,
- la figure 5 est une vue en coupe partielle, analogue à la figure 3, qui montre la présence d'un film isolant.

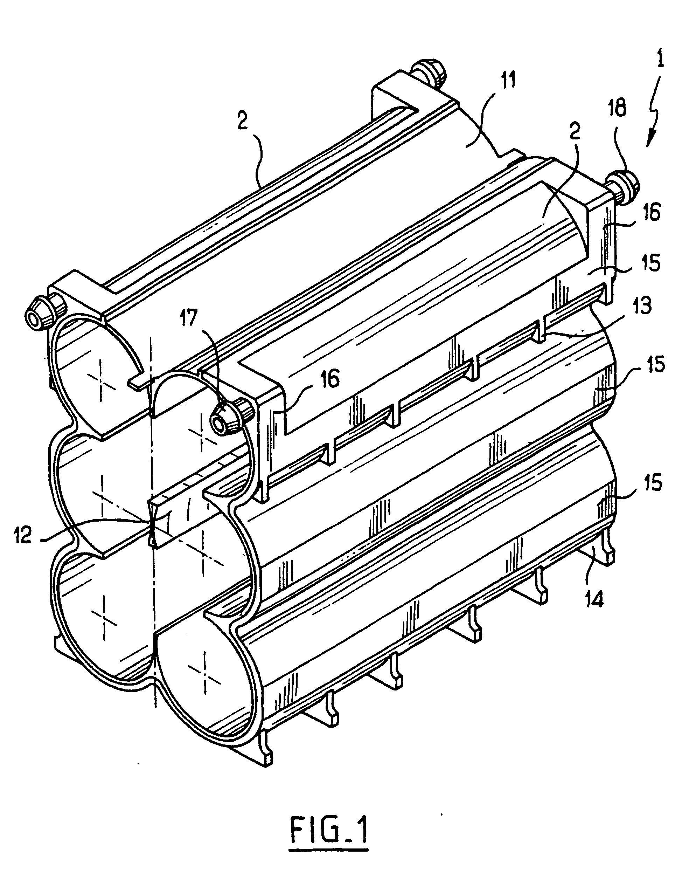

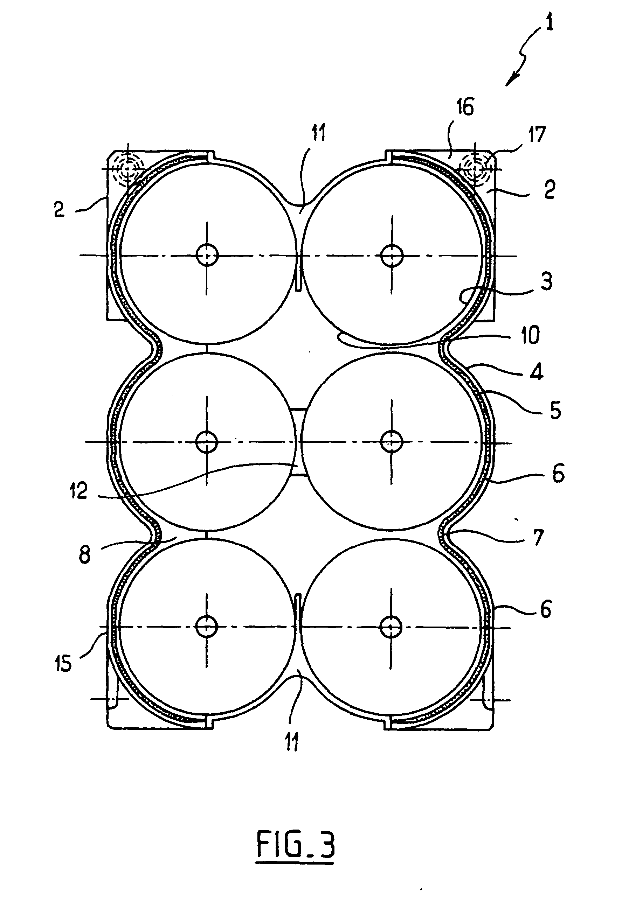

Le dispositif de gestion de température conforme à l'invention illustré sur les dessins est destiné à une batterie de six générateurs électrochimiques cylindriques disposés en deux colonnes contiguës de trois générateurs horizontaux superposés, non représentés sur les figures 1, 2 et 4, mais esquissés sur la figure 3.

Le dispositif est constitué d'une chemise 1 à double paroi épousant la forme des générateurs.

La chemise est formée de deux demi-chemises 2 assurant chacune la gestion thermique d'une colonne verticale de générateurs.

Chaque demi-chemise 2 comporte une paroi intérieure 3 épousant des secteurs cylindriques superposés des générateurs 10, et une paroi extérieure 4 de même forme maintenue à faible distance de la paroi intérieure 3 pour ménager un espace de circulation 5 de fluide caloporteur.

La double paroi 3, 4 forme donc en section (cf. figure 3) des arcs de cercles 6 accolés par leurs extrémités, les points de jonction 7 desdits arcs étant sensiblement alignés dans un plan vertical.

La paroi intérieure 3 comporte des éléments profilés 8 de séparation horizontale des générateurs 10, tandis que des éléments profilés intermédiaires 11 et 12 séparent verticalement les générateurs 10 entre les deux demi-chemises 2.

La paroi extérieure 4 comporte de place en place des reliefs 13, 14 sous forme d'ailettes, ainsi que des méplats 15 alignés dans un plan vertical.

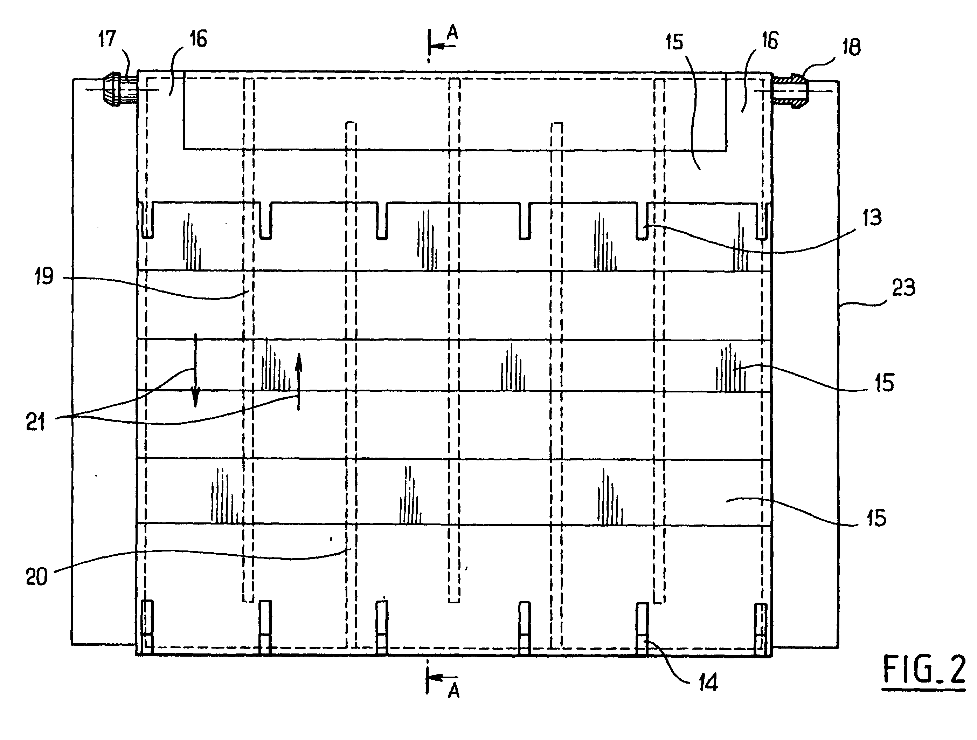

Aux extrémités longitudinales supérieures de chaque demi-chemise est formée une oreille 16 sur laquelle la tétine d'alimentation 17 et la tétine d' évacuation 18 sont disposées horizontalement, leur canal intérieur communiquant par l'intérieur de l'oreille avec l'espace 5. Les tétines 17, 18 restent à l'intérieur du volume enveloppe de la batterie, dont on a esquissé les limites longitudinales 23 sur la figure 2.

L'espace 5 est divisé intérieurement par des chicanes verticales hautes 19 et basses 20 définissant une circulation intérieure alternativement de haut en bas et de bas en haut comme le montrent les flèches 21 (figure 3), grâce à laquelle les générateurs peuvent être refroidis efficacement et de façon la plus homogène possible.

En effet, les éléments sont refroidis en parallèle. Le gradient de température créé entre le début et la fin de la circulation au voisinage des éléments est absorbé par la forte conduction thermique des électrodes dans le plan des couples (axe de l'élément).

Les deux circuits de refroidissement en parallèle limitent des pertes de charge.

Enfin, le liquide caloporteur entre et sort en haut du module, par les tétines horizontales, ce qui limite les bulles dans les tuyaux de raccordement au remplissage et facilite le mise en série hydraulique des batteries (deux batteries ont leurs tétines face-à-face).

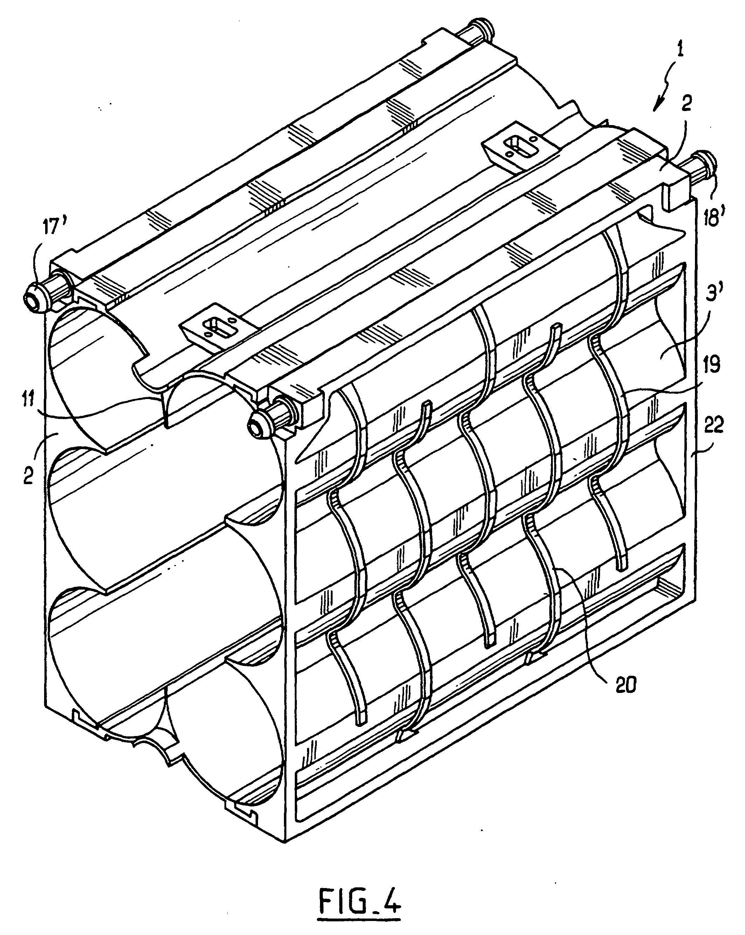

La figure 4 montre une variante de réalisation des chemises thermiques. La paroi intérieure 3', comportant les nervures en chicanes 19 et 20 est entourée d'un rebord formant un cadre plan 22 sur lequel peut venir se fixer un couvercle (non représenté) qui comporte la paroi extérieure coopérant avec la paroi intérieur 3' pour définir l'espace de circulation du fluide caloporteur. Dans ce mode de réalisation les tétines d'alimentation 17' et d'évacuation 18' sont formées sur les coins du cadre 22.

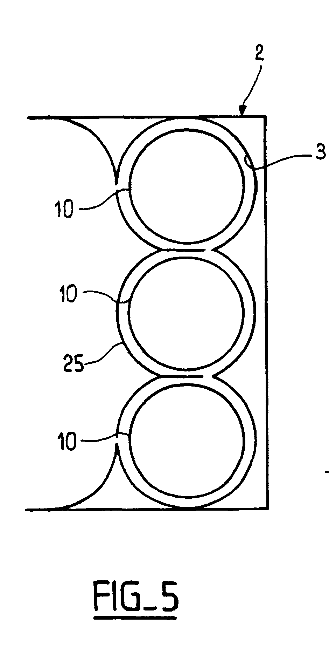

La figure 5 montre une variante de réalisation de la batterie de l'invention selon laquelle les conteneurs des générateurs 10 sont métalliques. La paroi interne 3 de la demi-chemise 2 réalisée en matière plastique est électriquement isolante, au moins sur la portion de sa surface en contact avec les conteneurs des générateurs 10. Sur la portion de la surface du conteneur des générateurs 10 qui n'est pas en contact avec la paroi 3 du dispositif, on dépose une couche 25 d'un matériau isolant connu sous la marque "NOMEX".

## Revendications

1. Dispositif de gestion de la température d'une batterie de générateurs électrochimiques (10), dans lequel le transport des calories est assuré par la circulation d'un fluide caloporteur, à l'intérieur d'une double paroi (3, 4), des reliefs (19, 20) étant disposés en chicane à l'intérieur de ladite double paroi (3, 4) pour obliger ledit fluide à circuler alternativement dans une direction et dans la direction opposée,
**caractérisé en ce que** lesdits générateurs sont de forme cylindrique disposés côte à côte, et **en ce que** le fluide caloporteur circule dans une chemise à double paroi dont la section a la forme d'arcs de cercles (6) accolés par leurs extrémités de telle sorte que les points de jonction (7) desdits arcs (6) soient sensiblement alignés, ladite paroi (3, 4) étant disposée contre ladite batterie de manière à ce que chacun desdits arcs de cercle (6) soit accolé coaxialement à l'un desdits générateurs (10), des reliefs (19, 20) étant disposés de manière à obliger ledit fluide à circuler parallèlement à ladite section.

2. Dispositif selon la revendication 1, comprenant des tétines d'entrée (17) et de sortie (18) du fluide caloporteur disposées parallèlement aux générateurs (10).

3. Dispositif selon la revendication 2, dans lequel les tétines (17, 18) sont à l'intérieur du volume enveloppe (23) de la batterie.

4. Batterie de générateurs électrochimiques contenant le dispositif selon l'une des revendications 1 à 3, dans laquelle le conteneur desdits générateurs est en matériau électriquement conducteur et la portion de surface dudit dispositif en contact avec ledit conteneur est en matériau électriquement isolant, un matériau électriquement isolant recouvrant exclusivement la portion de surface dudit conteneur qui n'est pas en contact avec ledit dispositif.

## Patentansprüche

1. Vorrichtung zum Steuern der Temperatur einer Batterie elektrochemischer Generatoren (10), in welcher Vorrichtung der Wärmetransport durch die Zirkulation eines wärmetransportierenden Fluids innen an einer Doppelwand (3,4) erzielt ist, wobei innen an der Doppelwand (3,4) Vorsprünge (19,20) schikaneartig angeordnet sind, um das Fluid zu zwingen, abwechselnd in eine beziehungsweise in die entgegengesetzte Richtung zu zirkulieren,
**dadurch gekennzeichnet, dass** die Generatoren zylinderförmig sind und nebeneinander angeordnet sind, und dass das wärmetransportierende Fluid in einer Doppelwand-Umhüllung zirkuliert, deren Querschnitt die Form von Kreisbögen (6) aufweist, welche an ihren Enden derart miteinander verbunden sind, dass die Verbindungs-Punkte (7) der Bögen (6) im Wesentlichen fluchten, wobei die Wand (3,4) derart gegenüber der Batterie angeordnet ist, dass jeder der Kreisbögen (6) koaxial an einen der Generatoren (10) angefügt ist, wobei die Vorsprünge (19,20) derart angeordnet sind, dass sie das Fluid zwingen, parallel zu dem Querschnitt zu zirkulieren.

2. Vorrichtung gemäß Anspruch 1, aufweisend einen EintrittsStutzen (17) und einen Austritts-Stutzen (18) für wärmetransportierendes Fluid, welche parallel zu den Generatoren (10) angeordnet sind.

3. Vorrichtung gemäß Anspruch 2, bei welcher sich die Stutzen (17,18) innerhalb des Batterie-Umhüllungs-Volumens (23) befinden.

4. Batterie elektrochemischer Generatoren, aufweisend die Vorrichtung gemäß einem der Ansprüche 1 bis 3, bei welcher Batterie der Behälter der Generatoren aus einem elektrisch leitfähigen Material ist, und wobei der mit dem Behälter in Kontakt stehende Abschnitt der Fläche der Vorrichtung aus elektrisch isolierendem Material ist, und wobei ein elektrisch isolierendes Material ausschließlich denjenigen Abschnitt der Fläche des Behälters bedeckt, welcher nicht mit der Vorrichtung in Kontakt steht.

## Claims

1. A device for controlling the temperature of a battery of electrochemical cells (10), with heat being conveyed by the flow of a heat-conveying fluid inside a double wall (3, 4), relief (19, 20) being disposed in a baffle configuration within said double wall (3, 4) to constrain said fluid to flow alternately in one direction and then in the opposite direction,
the device being **characterized in that** said cells are cylindrical in shape and disposed side by side, and **in that** the heat-conveying fluid flows in a double-walled jacket whose section is in the form of circular arcs (6) interconnected at their ends so that the junction points (7) between said arcs (6) are substantially in alignment, said wall (3, 4) being disposed against said battery in such a manner that each of said circular arcs (6) is disposed coaxially against one of said cells (10), relief (19, 20) being disposed to constrain said fluid to flow parallel to said section.

2. A device according to claim 1, including inlet and outlet endpieces (17, 18) for heat-conveying fluid that extend parallel to the cells (10).

3. A device according to claim 2, in which the endpieces (17, 18) are inside the envelope volume (23) of the battery.

4. A battery of electrochemical cells including the device according to any one of claims 1 to 3, in which the container for said cells is made of an electrically conductive material and the portion of the surface of said device which comes into contact with said container is made of an electrically insulating material, an electrically insulating material covering only that portion of the surface of said container that is not in contact with said device.
